(19) Europäisches Patentamt / European Patent Office / Office européen des brevets

(11) **EP 2 842 104 B1**

(12) **EUROPEAN PATENT SPECIFICATION**

(45) Date of publication and mention
of the grant of the patent:
**19.10.2016 Bulletin 2016/42**

(21) Application number: **13728556.5**

(22) Date of filing: **13.05.2013**

(51) Int Cl.:
*G06T 7/00* (2006.01)     *G06T 1/00* (2006.01)
*H05B 37/03* (2006.01)

(86) International application number:
**PCT/US2013/040715**

(87) International publication number:
**WO 2013/173209 (21.11.2013 Gazette 2013/47)**

(54) **METHOD AND APPARATUS TO GUARANTEE MINIMUM CONTRAST FOR MACHINE VISION SYSTEM**

VERFAHREN UND VORRICHTUNG ZUR GEWÄHRLEISTUNG EINES MINDESTKONTRASTES FÜR EIN MASCHINENVISIONSSYSTEM

PROCÉDÉ ET APPAREIL PERMETTANT DE GARANTIR UN CONTRASTE MINIMAL POUR UN SYSTÈME DE VISION INDUSTRIELLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.05.2012 US 201261646491 P**

(43) Date of publication of application:
**04.03.2015 Bulletin 2015/10**

(73) Proprietor: **Omron Corporation
Kyoto-shi, Kyoto 600-8530 (JP)**

(72) Inventors:
- **KINOSHITA, Koichi
Kyoto-shi, Kyoto 600-8530 (JP)**
- **TYAGI, Ambrish
Kyoto-shi, Kyoto 600-8530 (JP)**
- **DRINKARD, John
Kyoto-shi, Kyoto 600-8530 (JP)**
- **TANI, Yoshiharu
Kyoto-shi, Kyoto 600-8530 (JP)**

(74) Representative: **Horn Kleimann Waitzhofer
Patentanwälte PartG mbB
Ganghoferstrasse 29a
80339 München (DE)**

(56) References cited:
WO-A1-97/05562     JP-A- 2000 028 988
JP-A- 2001 338 782     JP-B2- 3 091 630
KR-B1- 100 854 703     US-A1- 2004 202 359
US-A1- 2006 126 911

- YI S ET AL: "Automatic sensor and light source positioning for machine vision", PROCEEDINGS OF THE INTERNATIONAL CONFERENCE ON PATTERN RECOGNITION. ATLANTIC CITY, JUNE 16 - 21, 1990. CONFERENCE A : COMPUTER VISION AND CONFERENCE B : PATTERN RECOGNITION SYSTEMS AND APPLICATIONS; [PROCEEDINGS OF THE INTERNATIONAL CONFERENCE ON PAT, vol. i, 16 June 1990 (1990-06-16), pages 55-59, XP010020227, DOI: 10.1109/ICPR.1990.118064 ISBN: 978-0-8186-2062-1
- ELLENRIEDER M M ET AL: "Reflectivity function based illumination and sensor planning for industrial inspection", PROCEEDINGS OF THE SPIE - THE INTERNATIONAL SOCIETY FOR OPTICAL ENGINEERING SPIE-INT. SOC. OPT. ENG. USA, vol. 5856, no. 1, 2005, pages 89-98, XP002711665, ISSN: 0277-786X

**Description**

RELATED APPLICATIONS

This application claims priority from US Provisional Application 61/646,491 filed May 14, 2012.

TECHNICAL FIELD

The present invention relates to an image-based (machine vision) monitoring system used, for example, in the safeguarding of machinery.

BACKGROUND

Generally a vision system relies on contrast of pixel brightness to detect objects. The contrast can be induced by texture on the object, different colors between the object and background, or shading of object surface, etc. Without making certain assumptions, there is no guarantee of contrast, because an object may not have any texture on it, its color may be similar to that of the background, or there may be no shading on the object depending on its shape and/or lighting condition. Therefore in some special cases, a vision system will fail to detect an object due to lack of contrast. This problem especially becomes significant in the case of vision monitoring systems that have applications in the area of machine safeguarding.

For safety applications, one must guarantee that the sensor maintains its stated detection capability under all circumstances. This guarantee means that when a minimum sized object enters a user defined area or volume-often referred to as the "protection zone" or "monitoring zone"-it shall be detected by the machine vision system with a certain minimum probability. To ensure minimum detection capability even in the worst case, it is required to enforce some restrictions on the environment and/or the objects.

Yi S. et al. "Automatic sensor and light source positioning for machine vision", Proceedings of the international conference on pattern recognition, Atlantic City, June 16 - 21, 1990, discloses an optimization approach to automatic sensor and light source positioning for a machine vision task, where geometric measurement and/or object verification is important. The goal of the vision task is assumed to be specified in terms of edge visibility. There are two types of edge visibility: (1) geometric edge visibility that indicates how much of the given edge is not occluded, and (2) photometric visibility that indicates how much of the given edge has enough contrast to be detected in the image. A heuristic optimality criteria for the optimal sensor and light source position is defined in terms of these two edge visibilities.

SUMMARY

In one aspect, this disclosure presents a method and apparatus for verifying that minimum object contrast requirements are met within a region representing a volume to be monitored by a machine vision system. In complementary fashion, the disclosure also presents a methodology for constraining the positions of the lighting sources to be used for illuminating the monitored volume at a minimum height above the floor, and for the use of a key light that provides asymmetrical lighting within the monitored volume relative to the camera(s) used for imaging the monitored volume. Correspondingly, the disclosure also presents a method and apparatus for monitoring for proper operation of the key light and responding to improper operation. The minimum contrast verification and key light monitoring operations can be implemented using standalone apparatuses, or can be incorporated into the machine vision system.

Thus, in the invention an apparatus as defined in claim 2 is configured to verify minimum object contrast within a field of view as seen by one or more imaging sensors of a machine vision system. The apparatus comprises one or more processing circuits configured to process image data corresponding to imaging of the field of view by the one or more imaging sensors while a test object was at a minimum-contrast position within the field of view. Here, the image data being intensity image data or 3D range data, and the one or more processing circuits are configured to calculate, based on processing the intensity or 3D range data, a contrast value for the test object and determine whether the contrast value meets a minimum contrast requirement, as represented by a predefined threshold. In at least one embodiment, the apparatus is functionally integrated within a machine vision system, which comprises the one or more image sensors and an associated control and processing unit.

In an example, an apparatus is configured to monitor an illumination source serving as a key light, where illumination from the key light enhances object contrast within a field of view of a machine vision system. In an example configuration, the apparatus comprises one or more sensors configured to monitor one or more operating parameters of the key light during operation of the machine vision system, an evaluation unit configured to determine whether the one or more monitored parameters meet predefined operating requirements, and a control unit. The control unit is configured to generate one or more information or control signals responsive to at least one of: detecting a loss of illumination from the key light; and determining that one or more of the monitored parameters do not meet predefined operating requirements.

Of course, the present invention is not limited to the above features and advantages. Indeed, those skilled in the art will recognize additional features and advantages upon reading the following detailed description, and upon viewing the accompanying drawings.

BRIEF DESCRIPTION OF THE DRAWINGS

Fig. 1 is a block diagram of one embodiment of an apparatus configured for monitoring illumination from a key light, which light is used to ensure minimum object contrast within a monitored volume monitored by a machine vision system.

Figs. 2 and 3 are block diagrams illustrating example details for the illumination monitoring apparatus of Fig. 1.

Fig. 4 is a logic flow diagram of a method of illumination monitoring with respect to a key light.

Fig. 5 is a block diagram of one embodiment of an apparatus for verifying that a minimum object contrast requirement is met within a monitored volume of a machine vision system.

Fig. 6 is a logic flow diagram of one embodiment of a method of verifying that minimum object contrast requirements are met.

Fig. 7 is a block diagram of one embodiment of a machine vision system that functionally incorporates apparatuses for monitoring the illumination of a key light and for verifying minimum object contrast.

Fig. 8 is a block diagram of a test piece for use in characterizing and evaluating illumination and object contrast within a monitored volume.

Fig. 9 is a block diagram illustrating a potentially problematic installation of cameras and lighting sources for monitoring a volume, e.g., around a hazardous machine.

Fig. 10 is a diagram illustrating contrast-related distribution curves related to object contrast within a camera's field of view, for different lighting intervals.

Fig. 11 is block diagram illustrating one technique taught herein for ensuring minimum object contrast within a monitored volume, based on positioning the imaging camera asymmetrically with respect to the light sources used to illuminate the monitored volume.

Fig. 12 is block diagram illustrating one technique taught herein for ensuring minimum object contrast within a monitored volume, based on adding an additional light source nearby an imaging camera, to introduce a lighting asymmetry with respect to a volume monitored via the imaging camera.

DETAILED DESCRIPTION

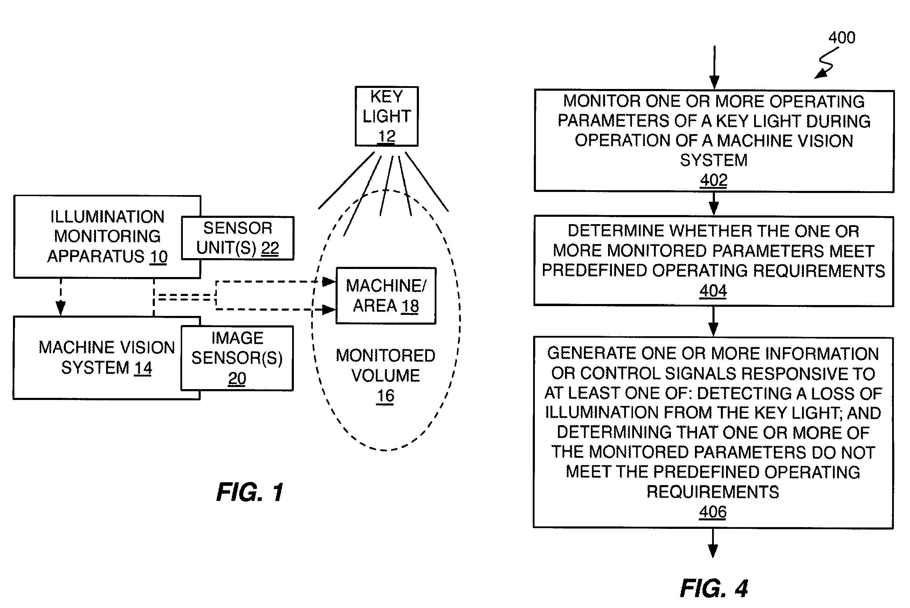

This disclosure provides advantageous teachings in several areas, including: (1) a lighting layout to guarantee contrast on an object; (2) a method and apparatus to monitor lighting condition; and (3) a method and apparatus to measure contrast. These and other advantages may be realized at least in part via the configuration and operation of an example illumination monitoring apparatus 10, such as shown in Fig. 1.

The illumination monitoring apparatus 10 is configured to monitor an illumination source serving as a key light 12, wherein illumination from the key light 12 enhances object contrast within a field of view of a machine vision system 14. The field of view defines a monitored area or volume 16, which is referred to generically as the "monitored volume 16." The monitored volume 16 may, in a non-limiting example, be understood as a region or zone around a hazardous machine or area 18, where the machine vision system 14 is configured to detect intrusions by humans or other objects into the monitored volume 16, e.g., for triggering machine stoppage or other guarding-related actions. To fulfill its volume-monitoring role, the machine vision system 14 includes, in an example one or more image sensors 20, such as stereoscopic cameras configured for three-dimensional (3D) imaging of the monitored volume 16.

Correspondingly, to fulfill its role in monitoring the key light 12, the illumination monitoring apparatus 10 in the example illustration includes one or more sensor units 22, which are configured to monitor one or more operating parameters of the key light 12 during operation of the machine vision system 14. In this manner, the illumination monitoring apparatus 10 can be understood as a mechanism for detecting failure or impairment of the key light 12 bearing on its role of providing contrast-enhancing illumination of any object within the monitored volume 16. In turn, in one or more embodiments, the key light 12 may be understood as the illumination source positioned closest to an image sensor 20 used by the machine vision system 14 for imaging the field of view.

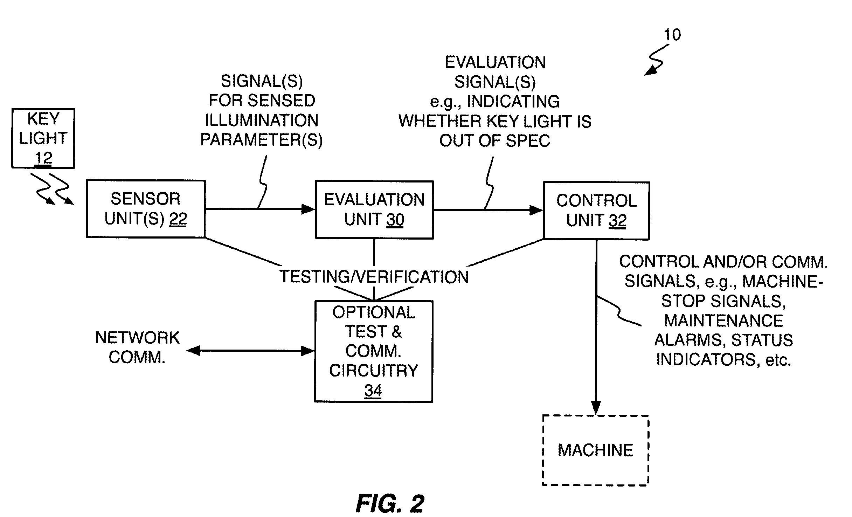

Fig. 2 illustrates the illumination monitoring apparatus 10 in greater, example detail. Here, the illumination monitoring apparatus 10 includes an evaluation unit 30, a control unit 32, and optionally includes test and communication circuitry 34. The evaluation unit 30 is configured to determine whether the one or more monitored parameters of the key light 12 meet predefined operating requirements. Correspondingly, the control unit 32 is configured to generate one or more information or control signals responsive to at least one of: detecting a loss of illumination from the key light 12; and determining that one or more of the monitored parameters do not meet predefined operating requirements.

In supporting the above functionality, it will be understood that the sensor unit 22 provides one or more signals for sensed illumination parameters, for evaluation by the evaluation unit 30. Further, the evaluation unit 30 outputs one or more evaluation signals-which may be discrete signals, digital data, etc.-to the control unit 32 that indicate whether the key light 12 is out of specification with respect to any of the monitored parameters. Thus, the control unit 32 can be understood as taking action responsive to indications from the evaluation unit 30. It may output control and/or communication signals, such as "machine stop" signals, alarm signals, maintenance signals, status indications, etc.

The optional test and communication circuitry 34 may receive one or more such signals or related internal signals from the control unit 32, and it may interface with the evaluation unit 30 and/or the sensor unit 22. The test and communication circuitry 34 provides network communications capability to the illumination monitoring apparatus 10. For example, illumination status information may be provided via network communications.

As for the monitored parameters of the key light 12, the sensor unit 22 monitors one or more of: an illumination intensity of the key light 12, and a modulation phase or frequency of the key light 12. For the case where the modulation phase or frequency of the key light 12 is one of the monitored parameters, the control unit 32 is configured to generate a frequency-indicating or phase-indicating signal slaved to the monitored modulation frequency or phase of the key light 12, such as may be used by the machine vision system 14 for synchronizing its image acquisition to the modulation frequency or phase of the key light 12. In a corresponding example configuration, the machine vision system 14 is configured to synchronize its image acquisition by using the frequency-indicating or phase-indicating signal to control the exposure of the one or more image sensors 20 of the machine vision system 14. For example, the machine vision system 14 uses the frequency-indicating or phase-indicating signal from the illumination monitoring apparatus 10 to control the image sensors 20 so that they expose during the high phase of the modulating cycle of the key light 12.

In cases where the illumination monitoring apparatus 10 is configured to generate a machine stop signal or other safety-critical signal as one or more of the information or control signals output by the control unit 32, the control unit 32 is configured to do so in response to the evaluation unit 30 detecting that an illumination intensity of the key light 12 has fallen below a predefined illumination intensity threshold. In cases where the illumination monitoring apparatus 10 is configured to generate one or more maintenance or warning-type signals as one or more of the information or control signals output by the control unit 32, the control unit 32 is configured to do so in response to the evaluation unit 30 detecting that one or more of the one or more monitored parameters of the key light 12 are outside of nominal limits.

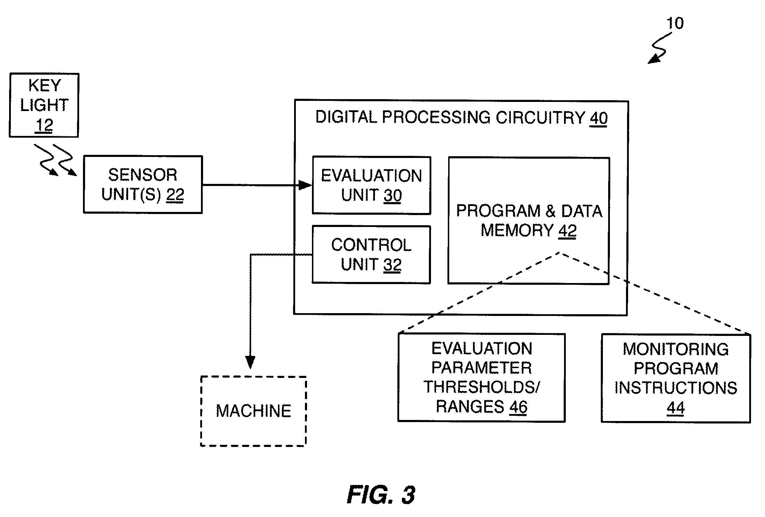

Fig. 3 illustrates further example implementation details for the illumination monitoring apparatus 10, such as the use of digital processing circuitry 40 to implement the evaluation unit 30 and the control unit 32. In one example, the digital processing circuitry 30 comprises one or more digital processors, such as microcontrollers, DSPs, or the like, and includes or is associated with program and data memory 42 or some other computer-readable medium which stores monitoring program instructions 44 and evaluation parameter thresholds or ranges 46. Thus, the digital processing circuitry 40 is configured to perform the key-light monitoring operations disclosed herein based on its execution of stored computer program instructions 44, and it may evaluate measured key light parameters against stored measurement thresholds or ranges 46.

Whether or not it is implemented as shown in Fig. 3, Fig. 4 illustrates an example method 400, which the illumination monitoring apparatus 10 may be configured to perform. The method 400 provides for monitoring an illumination source serving as a key light 12, wherein illumination from the key light 12 enhances object contrast within a field of view of a machine vision system 14. The illustrated embodiment of the method 400 includes monitoring (Block 402) one or more operating parameters of the key light 12 during operation of the machine vision system 14; determining (Block 404) whether the one or more monitored parameters meet predefined operating requirements; and generating (Block 406) one or more information or control signals responsive to at least one of: detecting a loss of illumination from the key light 12; and determining that one or more of the monitored parameters do not meet predefined operating requirements.

The illumination monitoring apparatus 10 therefore can be broadly understood as being configured to ensure that improper illumination of a monitored volume 16 is detected and to ensure that appropriate, corresponding actions are initiated in response to illumination detection. In one example case, the key light 12 provides asymmetrical lighting, or otherwise is positioned relatively close to one or more of the image sensors 20 used by the machine vision system 14 to image the monitored volume 16, such that proper operation of the key light 12 ensures that objects in the monitored volume 16 will have sufficient contrast even in the worst-case detection scenario.

For example, the evaluation unit 30 is configured to evaluate an output signal or signals from the sensor unit 22, which may be digital or analog, and which may be proportional or stepped/non-linear, to determine whether the one or more monitored characteristics of light output by the key light 12 are within desired parameters. Non-limiting examples include comparing an analog signal proportional to light intensity to a defined threshold voltage corresponding to a minimum acceptable illumination. Equivalently, the sensor unit 22 or the evaluation unit 30 digitizes an intensity signal, for comparison to a digital word that corresponds to a minimum intensity level. Frequency counters, filter circuits, phase detection circuits, etc., are further included in one or more examples of the evaluation unit 30, to monitor one or more other characteristics of the key light 12.

In a specific example, the evaluation unit 30 monitors the modulation frequency of the key light 12, to insure that the modulation frequency is within a specified range of a nominal, target modulation frequency. The measured frequency and phase information are used to trigger the exposure timing for camera-based image sensors 20, as used by the machine vision system 14. Doing so limits contrast degradations that may be caused by one or more modulating light sources illuminating the monitored volume 16.

As for the core illumination monitoring features of the illumination monitoring apparatus 10, the control unit 32 is configured to receive evaluation results from the evaluation unit 30-e.g., a discrete logic signal, or a digital word, or an analog signal, or some other indicator. The control unit 30 is configured to recognize from the evaluation unit 16 that the key light 12 has failed or is otherwise operating outside of a defined operating range. There may be multiple failure types, e.g., light intensity too low, modulation frequency out of range, etc.

The control unit 30 is sophisticated enough to differentiate between the severity of events indicated by the evaluation unit 30, such as by triggering a maintenance alert when the monitored light intensity falls to a first threshold, and then initiating an alarm and/or a machine-stop control signal if the monitored light intensity falls to a lower, second threshold. In this regard, it will be understood that the evaluation unit 30 is configured to use multi-threshold monitoring.

In dual channel examples of the illumination monitoring apparatus 10, redundant outputs are used from the evaluation unit 30 and/or the control unit 32, to ensure safety integrity. To further improve safety and overall integrity of the volume monitoring installation, the illumination monitoring apparatus 10 may further include minimum contrast verification capabilities. That is, its processing and sensor circuitry may include (or borrow from the machine vision system 14), sensing and processing capabilities needed to verify that minimum object contrast requirements are met within the monitored volume 16.

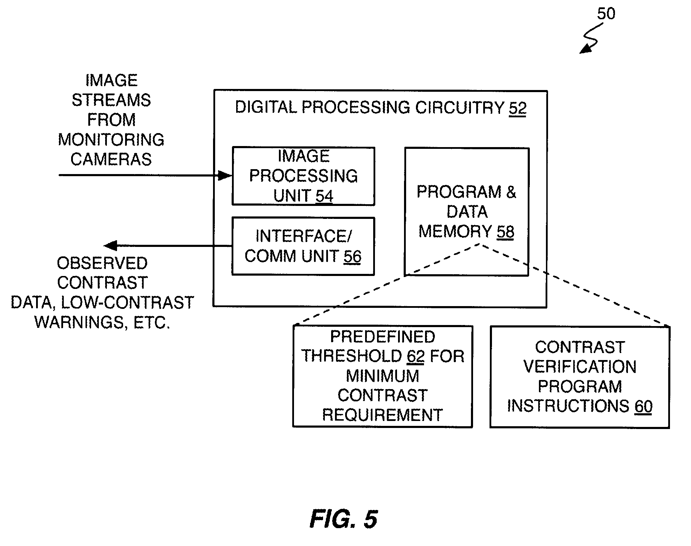

Of course, such functionality may be implemented separately from the illumination monitoring apparatus 10 and/or may be integrated within the machine vision system 14 regardless of whether or not the illumination monitoring apparatus 10 is integrated into the machine vision system 14. Thus, for clarity of discussion, Fig. 5 illustrates an example embodiment of a minimum contrast verification apparatus 50, which can be standalone, part of the illumination monitoring apparatus 10 and/or part of the machine vision system 14. For brevity, the minimum contrast verification apparatus 50 is referred to as the "contrast verification apparatus 50."

Whether or not they are integrated, the illumination monitoring apparatus 10 and the contrast verification apparatus 50 together carry out a method for initializing and verifying the lighting configuration to be used for monitoring a monitored volume 16 by a machine vision system 14. That is, in addition to the key light monitoring method 400 described above, and the associated example embodiments of the illumination monitoring apparatus 10, it is also contemplated herein to verify minimum object contrast within a field of view as seen by one or more imaging sensors 20 of a machine vision system 14.

As noted, Fig. 5 provides example implementation details for the contrast verification apparatus 50, which includes digital processing circuitry 52 implementing an image processing unit 54. The digital processing circuitry 52 further includes or is associated with an interface and communications unit 56 and program and data memory 58, or some other computer-readable medium storing contrast verification program instructions 60 for execution by the digital processing circuitry 52.

The verification apparatus 50 thus can be understood as comprising one or more processing circuits that are configured to process image data corresponding to imaging of the field of view by the one or more imaging sensors 20, e.g., cameras, while a test object was at a minimum-contrast position within the field of view. That is, whether the image data being processed represents a "live" feed of the monitored volume 16, or represents previously captured image data, the image data captures the test object as located at the minimum-contrast position within the monitored volume 16.

In that regard, the image data comprises intensity image data or 3D range data. Correspondingly, the one or more processing circuits of the verification apparatus 50 are configured to calculate, based on image data processing, a contrast value for the test object and determine whether the contrast value meets a minimum contrast requirement, as represented by a predefined threshold 62, which may be stored in the program and data memory 58.

In the case that 3D range data is used for processing by the image processing unit 54, the contrast value for the test object is determined based on at least one of: the presence or absence of 3D range data corresponding to the test object at the minimum contrast position, and the density and/or statistical properties (such as variance) of 3D range data for the test object, e.g., for 3D range data at pixel positions corresponding to the surface extents of the test object.

In addition to, or as an alternative to receiving image streams from the imaging sensors of the machine vision system 14, the interface and communications unit 56 may include one or more interface circuits configured to receive the image data for minimum contrast verification processing. Such an arrangement allows, for example, the contrast verification apparatus 50 to be implemented separately from the machine vision system 14, or at least allows the contrast verification apparatus 50 to be implemented more flexibly as it does not necessarily need direct access to the imaging data flowing from the image sensors 20. Further, the interface and communications unit 56 may be configured to record or otherwise output one or more signals indicating whether the minimum contrast requirement is met.

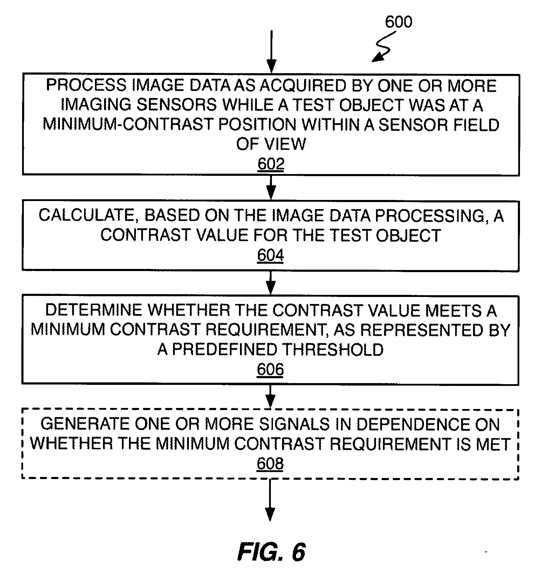

Fig. 6 illustrates a corresponding verification method 600, as performed by the contrast verification apparatus 50. In the illustration, the method 600 includes processing (Block 602) image data as acquired by the one or more imaging sensors while a test object was at a minimum-contrast position within the field of view, and further includes calculating (Block 604), based on such processing, a contrast value for the test object. Still further, the method 600 includes determining (Block 606) whether the contrast value meets a minimum contrast requirement, as represented by a predefined threshold. Additionally, depending upon its implementation, the method 600 may include generating (Block 608) one or more signals in dependence on whether the minimum contrast requirement is met.

In the invention, Gamma, $\gamma$, represents the contrast created on the surface of a textureless spherical test piece as a function of scene lighting and is defined as,

$$\gamma \equiv \frac{I_{\max} - I_{\min}}{I_{\max}}$$

where, I_max and I_min are maximum and minimum intensity values in a test piece image, respectively, where calculating (Block 604) the contrast value comprises calculating Gamma for the test object, and where determining (Block 606) whether the minimum contrast requirement is met comprises comparing Gamma to the predefined threshold.

As noted for the illumination monitoring apparatus 10, the contrast verification apparatus 50 may be implemented as one or more functional processing circuits integrated into the machine vision system 14. This arrangement is advantageous in a number of respects. For example, the machine vision system 14 already includes or is associated with the one or more image sensors 20 and it includes an associated control and processing unit, e.g., image-processing circuitry that is already adapted for processing image sensor data for the field of view and determining corresponding pixel intensity and/or 3D range data.

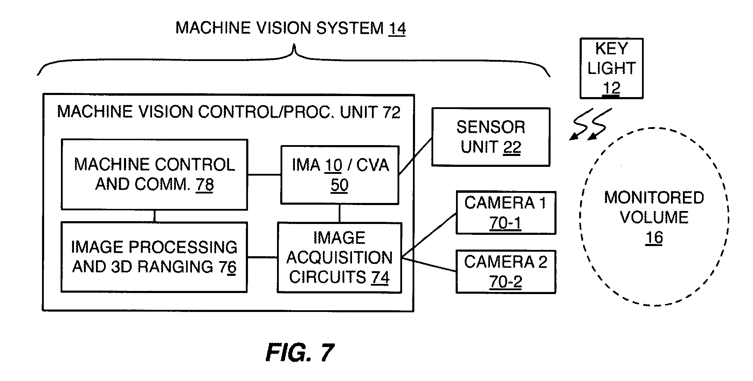

Indeed, the illumination monitoring apparatus 10 and the verification apparatus 50 can be implemented together, and one or both of them can be functionally incorporated into the overall machine vision system 14, which case is shown by way of example in Fig. 7. Here, the machine vision system 14 includes the aforementioned illumination monitoring apparatus 10 for key light monitoring (indicated as "IMA 10" in the figure) and the contrast verification apparatus 50 (indicated as "CVA 50" in the figure). The example machine vision system 14 further includes or is associated with the sensor unit 22 for key light monitoring, and one or more image sensors 20, which are depicted in the figure as cameras 70-1 and 70-2, e.g., for stereoscopic, 3D imaging of the monitored volume 16.

Processing for carrying out the operations of the IMA 10 and the CVA 50 may be implemented within a machine vision control / processing unit 72, which itself may comprise digital processing circuitry such as microcontrollers and/or DSPs, FPGAs, etc., and supporting circuitry. Such circuitry further includes image acquisition circuits 74, which are configured for processing the raw image data from the cameras 70 and which may feed processed image data into the CVA 50 for minimum contrast verification during a verification mode of operation for the machine vision system 14, and which also feed image data for the monitored volume 16 into image processing and 3D ranging circuits 76. The circuits 76 will be understood as providing object detection processing with respect to the monitored volume 16, and the machine control and communication circuits 78 will be understood as being configured to provide control and communication signaling, e.g., for alarms, machine stop control, etc., in the context of object detection, key light monitoring, and minimum contrast verification.

In at least one such embodiment, the lights to be used to illuminate the monitored volume 16 are positioned in their intended locations and a 3D test piece-e.g., a low-texture sphere-is moved into various locations of the monitored volume 16 while a machine vision system 14 that integrates at least the contrast verification apparatus 50 images the monitored volume 16 and evaluates detected contrast levels.

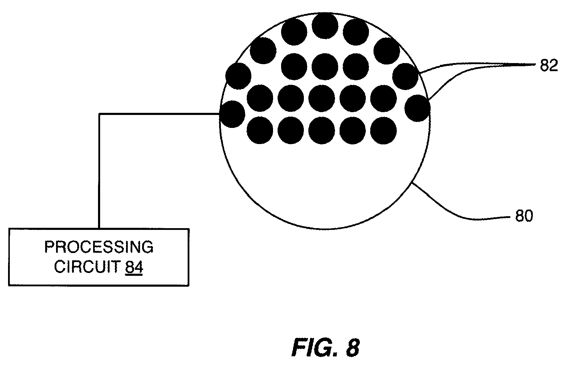

In an alternative example, the "test piece" 80, such as shown in Fig. 8, is specially configured for use in contrast verification. For example, the test piece 80 carries an array of light sensors 82 and it provides light measurement signals corresponding to the illumination it experiences when positioned in the monitored volume 16, or it provides signals derived from such light measurement. In this regard, the test piece 80 includes or is associated with a processing circuit 84, which may provide processed output, or which may provide at least preprocessing for the illumination signals generated by the array of light sensors 82.

In turn, the image processing unit 54 of the contrast verification apparatus is configured to evaluate the light measurement information from the test piece and thereby estimate contrast. Similarly, the evaluation circuit 30 of the illumination monitoring apparatus 10 is configured to interface with the test piece 80. Thus, the verification apparatus 50 or the illumination monitoring apparatus 10 can be used by an operator once the lights are in place with respect to the monitored volume 16, for minimum contrast verifications.

In another embodiment, the same functionality is integrated into the machine vision system 14, which may be configured to include a "configuration" or "verification" mode in which the machine vision system 14 processes images of the test object 80 from various or at least worst-case locations within the monitored volume 16, and compares the detected contrast to defined minimum contrast levels.

Such integration has certain advantages, particularly in the case where a machine vision system 14 is configured for safety-critical operation and includes dual channel monitoring and processing and/or other forms of operational verification testing, which allows for self-check/self-test of the illumination monitoring functionality provided by the illumination monitoring apparatus 10 and/or minimum contrast verification. In another embodiment, the illumination monitoring apparatus 10 is implemented separately from the machine vision system 14 responsible for monitoring the monitored volume 16 for object intrusion, but provides signaling to the machine vision system 14-e.g., key light failure and/or warning signaling-which is used by the machine vision system 14 to trigger machine stop or other operations. In such embodiments, the illumination monitoring apparatus 10 generally will have its own control outputs for machine stoppage and/or other control actions.

To better understand the above mitigations and verifications, consider that the brightness of a surface element of any convex body with homogenous diffuse (Lambert's) reflectivity, illuminated by a point light source with intensity I, is given by Equation 1.

$$I(\varphi) = I \times \cos(\varphi) \qquad (1)$$

wheres, $\varphi$ denotes the angle made by the line joining the surface element to the light source with respect to normal vector of the surface element. As seen from the equation, the brightness depends on the direction of illumination on the surface element.

Of course, for the machine vision system 14, the contrast created on a test object is an important factor in determining the detection accuracy. As noted earlier herein, the metric Gamma, $\gamma$ is used to capture the notion of contrast created on the surface of a textureless spherical test piece as a function of scene lighting. As before,

$$\gamma \equiv \frac{I_{\max} - I_{\min}}{I_{\max}} \qquad (2)$$

where, $I_{\max}$ and $I_{\min}$ are maximum and minimum intensity value on the test piece image, respectively. Note, that numerator of the above equation denotes contrast. The metric $\gamma$ is defined over the entire 2D projection area of the test piece. In other words, $\gamma$ is calculated from the maximum and minimum intensity measured over the entire projected surface of a given test piece.

Intuitively, for a spherical test piece, the metric $\gamma$ can be seen as a measure of directionality of the light sources. For instance, if a test piece is equally and uniformly illuminated from all sides, the minimum and maximum intensity on the test piece will be very similar. This will result in a very small contrast and also a very low $\gamma$ value. Hence, $\gamma$ is low for uniform or homogeneous lighting conditions. On the other hand, if the spherical test piece is illuminated by a directional light source (e.g., spot light), the measured contrast on the test piece will be very high (since the difference between the brightest and the darkest visible part on the test piece will be large). Consequently, the measured $\gamma$ value will be very high.

Therefore, lighting configurations that generally have a larger fraction of directional lighting component will result in a higher $\gamma$. Further, as the metric $\gamma$ depends on illumination conditions, it may vary substantially over a large monitored volume 16. However, the local variations in $\gamma$ are generally smooth. Typical lighting situations produce sufficient contrast, and hence provide an acceptable $\gamma$ for most cases on a textureless spherical test piece.

However, one can conceive a pathological lighting case where the worst-case test piece is only illuminated uniformly from all sides, while lacking any illumination from the top (assuming the image sensors(s) 20 also view the test piece from the top). Under this lighting configuration, the darker parts of a spherical test piece (boundary) appear brighter, and the typically brighter surface (top) may appear darker, thus creating a low contrast situation, and hence unacceptably low $\gamma$. Such a condition is highly improbable in real world situations, and one of the objectives of this disclosure is to define and exclude such pathological cases.

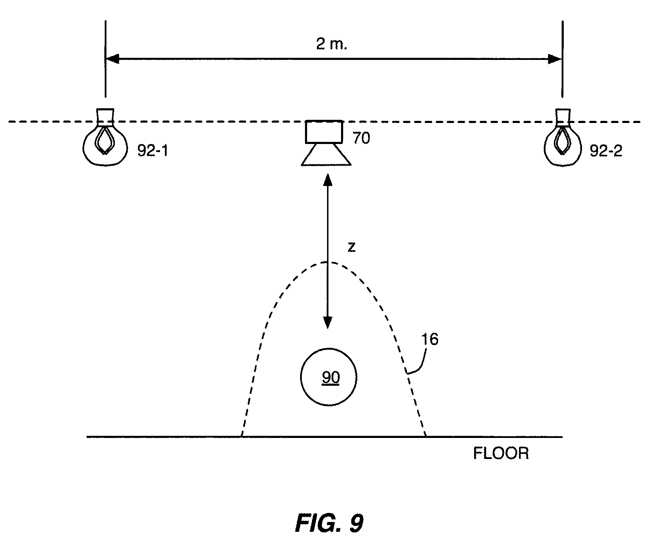

Refer to Fig. 9 for an illustration in which the metric $\gamma$ for a test object 90 varies over space. The $\gamma$ distribution is a function of the test piece distance from the camera. A camera 70 is set in the middle of two similar intensity light sources 92-1 and 92-2. The $\gamma$ values for the test piece 90 vary as function of object distance z. When the test piece 90 is relatively close to the camera 70 (and equidistant from the light sources 92), its sides are as bright as its top, which results in a small value of $\gamma$, as measured on a horizontal centerline through the test piece 90. Thus, one aspect of the teachings herein defines conditions and/or requirements for ensuring that a monitoring system's protection volume will not contain such low $\gamma$ regions. Here, those skilled in the art will recognize that the term "protection volume" refers, for example, to the volume being monitored for object presence or intrusion by a given monitoring system.

In the following sections, this disclosure presents a concrete method of configuration that completely captures these and other requirements for proper lighting. In particular, among other things, this disclosure provides: (a) requirements on lighting layout to ensure low contrast (gamma) situations are avoided; (b) configuration steps during setup (and related apparatus) to ensure that requirements in (a) are satisfied and proper contrast is available in the monitored volume; and (c) a method and apparatus to ensure that the protective volume maintains sufficient contrast during run time (post installation) by monitoring the key light 12.

Maintaining good object contrast at heights at or near the floor in the monitored volume 16 around a hazardous machine or area is particularly important. Correspondingly, it is observed herein that regions of low Gamma $\gamma$ occur near to the floor primarily for two reasons. Namely, the installation of light sources 92 for the monitored volume 16 at lower heights, closer to the floor; or the placement of the cameras 70 at relatively large distances from the nearest light source 92.

Placing restrictions on the minimum heights of the light sources 92 effectively prevents the first problem. However, lighting height restrictions do not address the second problem of improper camera placement. Larger separation between the lights 92 and the camera 70 results in a low $\gamma$ region at distances relatively closer to the floor. In such cases, the top of a test piece 90 will become darker than the side(s) of the test piece 90, hence creating a low contrast condition.

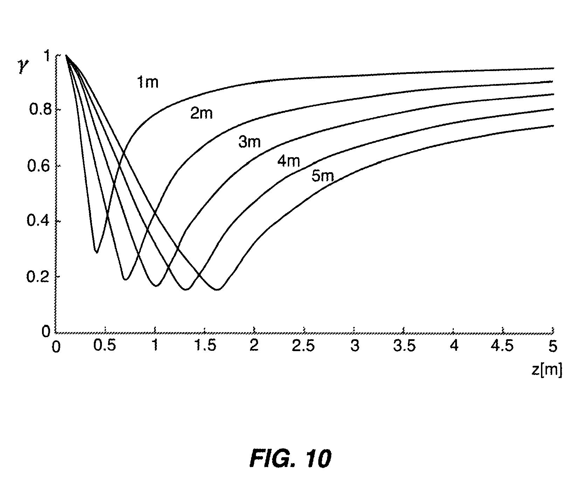

Fig. 10 shows $\gamma$ distributions for several different lighting intervals-here, "lighting interval" means the rectilinear (or city block or Manhattan or Minkowski $L_1$) distance between two neighboring lights 92 placed on a regular grid. One sees from the figure that as the lighting interval increases, the dangerous low $\gamma$ region moves away from the camera 70 and closer to the more critical volume (near the floor) that needs to be safeguarded.

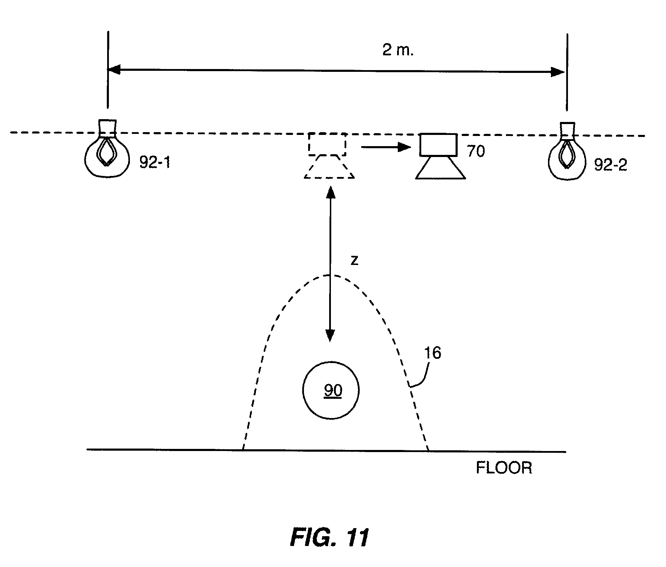

One countermeasure to the above problem involves breaking the lighting symmetry with respect to the camera's imaging of the monitored volume 16. Asymmetry may be introduced by installing the camera 70 closer to one of the lights 92, e.g., closer to light 92-2, as compared to light 92-1. This arrangement is shown in Fig. 11 and is one effective countermeasure for preventing the low gamma region that would otherwise occur near the floor. That is, by setting the camera position away from the axis of symmetry for the lights 92, the camera 70 will view the test piece 90 placed on this axis from a diagonal vantage point.

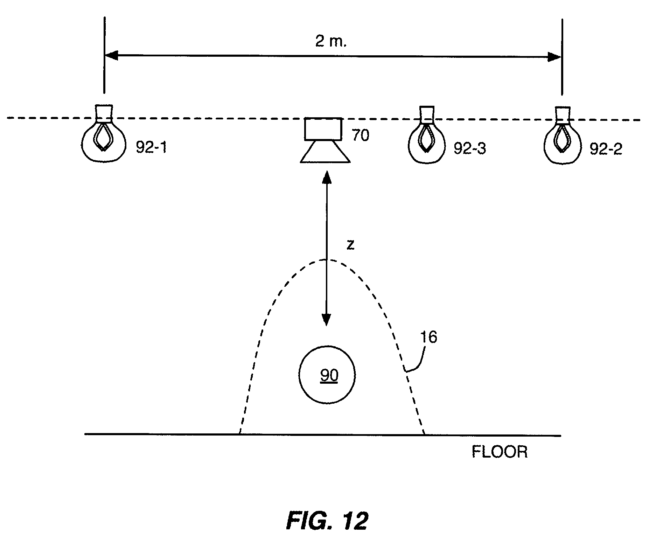

In such a case the camera 70 can see the top and bottom side of a sphere at a same time. However, since the lower side of the sphere is usually much darker than the top, the resulting image will have a higher contrast compared to when the camera 70 is placed on the lighting symmetry axis. Alternatively, the same effect can be achieved by installing an additional light 92 next to the camera 70, as shown in Fig. 12. This new light 92 breaks the lighting symmetry and also leads to good contrast, and it can be understood as playing the earlier described role of a "key light 12."

Hence, among the innovations taught herein, a method is presented for preventing low contrast situations in a monitored volume 16, based on constraining the lighting and camera layout. The constraints include: (a) ensuring a minimum height of the installed lights from the floor, (b) introducing a lighting asymmetry relative to the camera 70 used to image the monitored volume 16, based on installing the camera 70 closer to one of the lights 92 used to illuminate the monitored volume 16 or installing one or more additional lights closer to the camera 70. The light(s) 92 positioned closest to the camera 70, i.e., the lights 92 that cause the lighting asymmetry are referred to as key lights 12 and may be monitored during live operation of the machine vision system 14 used to monitor the monitored volume 16.

That is, it is recognized herein that use of a key light 12 is integral to maintain minimum detection capability within the monitored volume 16, and it is further recognized therefore that there is a need to actively monitor the key light 12 for any deterioration or failure. Thus, as previously detailed, it is another aspect of the teachings herein to use an illumination monitoring apparatus 10, or a machine vision system 14 that incorporates such functionality, to monitor the key light 12, to ensure that it is in an acceptable operational condition, and thereby ensure good contrast for objects within the monitored volume 16.

The sensor unit 22 shown in Figs. 1-3, as used for key light monitoring, may be a CMOS or CCD, photodiode, phototransistor, photoresistor, or other photosensitive element that is positioned nearby the key light 12 and used to actively monitor its light output. As noted in the earlier discussion of the light monitoring apparatus 10, the sensor unit 22 provides its light monitoring signal or other such detection output to an evaluation unit 30, such as shown in Figs. 2 and 3. In turn, the evaluation unit 30 is configured to detect significant deterioration in the light output of the key light 12 by, for example, detecting deterioration of light power (e.g., below a trigger point or defined threshold) and correspondingly to send a signal to the control unit 32. In an example configuration, the control unit 32 takes appropriate response by, for example, stopping the hazardous machine or alarming the user to prevent an accident.

The sensor unit 22, the evaluation unit 30, and control unit 32 may be implemented separately with signaling connections between them, or two or more of these units may be integrated together, e.g., the evaluation and control unit may be integrated together, with a wired or wireless connection to the sensing unit 22, which is placed in appropriate proximity to the key light 12. Regardless of the level of integration, the various units may be regarded as an illumination monitoring apparatus 10 and the functionality may be implemented using discrete circuitry, fixed processing circuitry, programmable processing circuitry, or any combination thereof.

Safety-critical aspects are also addressed in one or more examples of the illumination monitoring apparatus 10. For example, the illumination monitoring apparatus 10 may be configured to test or otherwise discern the operational condition of the sensing unit 22 (and connectivity thereto), to ensure that the key light 12 is being properly monitored. Further, as was noted earlier, one or more examples of the illumination monitoring apparatus 10 are configured to measure other properties of the key light 12, such as, phase and frequency. Monitoring of these other key light characteristics is useful in situations where the lights 92 used to illuminate the monitored volume 16 are modulated with a certain frequency and amplitude.

Among the several advantages and innovations attending the illumination monitoring apparatus 10 and its usage are the following items: (1) the key light 12 is actively monitored to prevent potentially low contrast situations from occurring, or to at least detect when a low contrast situation has occurred so that appropriate actions can be taken (such as asserting a maintenance signal, an alarm signal, a machine-stop initiation signal, controlling a machine-stop relay, etc.); and (2) the techniques disclosed herein for key light monitoring are cost-effective and reliable, e.g., based on placing a sensor close to the key light 12, for live monitoring of irradiance and light phase (if applicable).

During the setup for illumination and monitoring of a protection volume, it is important to be able to measure the contrast and $\gamma$ in an actual scene, to make sure that no dangerous low contrast regions exist at initialization. If the contrast and $\gamma$ levels at the time of setup are sufficient, then they will be maintained or improved by addition or removal of any light sources as long as the key light 12 is present and functioning properly.

Turning off lights other than the key light 12 will increase in the net directionality of lighting compared to the initial condition, hence, effectively leading to an increase in $\gamma$. So as long as initial scene lighting satisfies minimum $\gamma$ requirements, no dangerous situation (i.e., low contrast) will result by removal of an existing light source. Still however, removal (or switching off) of light sources may reduce the scene brightness below the minimum levels. Such low brightness conditions could be detected by simple methods (e.g., monitoring pixel brightness levels for the imaging cameras 70). Minimum (but not critical) $\gamma$ regions may move to other locations within the monitored volume 16, and may lead to decreasing $\gamma$ to some extent, but as long as the key light 12 is on, pathological lighting configurations will not manifest and no new critical $\gamma$ region will appear in the monitored volume 16.

On the other hand, adding additional light sources may decrease $\gamma$ in some cases, and it may cause dangerous situations in extreme situations. These conditions, referred to as pathological lighting conditions, can result from adding multiple strong light sources symmetrically placed outside the monitored volume 16 with respect to the camera 70. Such cases are extremely unlikely; nevertheless, it is required that users avoid such configurations. The setup verification method described in this section ensures that this condition does not occur at configuration time. Further, in contrast to the pathological lighting conditions discussed above, adding lights around the monitored volume 16 will tend to increase $\gamma$ as they will add to the net directionality of lighting, and hence will not lead to a dangerous (low $\gamma$ or contrast) situation.

As previously described, contrast is influenced by lighting conditions, the 3D shape of the illuminated object, and the vantage point of the camera 70. To obtain contrast measurements on a 3D sphere, one may employ a test piece 90 with the same profile, i.e., a 3D sphere.

An example measurement process is described as follows:

1) Place the test piece at a position where $\gamma$ measurement is needed.
2) Capture the images using a camera mounted at the desired or planned position.
3) The region denoting the image projection of the test piece is selected either manually or automatically.
4) Maximum and Minimum intensities ($I_{max}$ and $I_{min}$) are obtained within the selected region.
5) The $\gamma$ value is calculated according to Equation (2).

Further, to obtain the true contrast variation caused only by lighting layout and object shape, the surface of the test piece 90 must be diffuse.

Another method to measure $\gamma$ involves creating a sensor array distributed on a spherical test piece, such as the test piece 80 shown in Fig. 8, with its array of light sensing elements 82. These multiple light sensing elements 82 are aligned on the surface of the spherical test piece 80 and receive light from multiple directions and send appropriate signals to the processing unit 84, depending on the light power. Incoming signals will contain the light field distribution and can be further processed by the processing unit 84 to compute the effective contrast on the sphere. Such an apparatus first transforms the incoming signals such that they maintain a relationship to incoming irradiance, i.e., light falling on the sphere. Then $\gamma$ is calculated by the following equation:

$$\gamma = \frac{S_{max} - S_{min}}{S_{max}} \qquad (3)$$

where, $S_{max}$ and $S_{min}$ are the maximum and minimum transformed signal from the light sensing elements 82, respectively. In this method, the top of spherical test piece 80 should be oriented to the camera 70 to obtain a correct measurement of $\gamma$.

Thus, in a further aspect, this disclosure presents a method and apparatus for initialization and verification of the lighting configuration to be used for volume monitoring. Innovative elements for this aspect of the disclosure include but are not limited to the following items: (1) a method of measuring $\gamma$ by using a 3D shape test piece and captured images from the installed camera, and/or (2) a method and apparatus to measure $\gamma$ by an array of light sensors distributed on the surface of a specially adapted spherical "test object."

In order for stereo correlation to work well and to avoid dynamic-range violations within the scene being imaged, the machine vision system 14 may require high dynamic range (HDR) images that exceed the dynamic range of the camera(s) 70 used to acquire scene images. To achieve the required dynamic range, the machine vision system 14 can be configured to combine two or more camera exposures to generate a high-dynamic-range image. This process is called HDR fusion.

In one example, the main steps for HDR image fusion include a calibration characterization step to recover the inverse camera response function (CRF), $g\text{:}Z{\rightarrow}R$ required at the manufacturing stage. As a non-limiting example, the domain of $g$ is 10-bit (imager data resolution) integers ranging from 0-1023 (denoted by Z). The range is the set of real numbers, R. HDR image fusion further includes a run time fusion step, in which the CRF is used to combine the images taken at different (known) exposures to create an irradiance image, E, and a tone mapping step, in which the recovered irradiance image is tone mapped using the logarithmic operator. The tone mapping step may be understood as the natural outcome of the fusion step, and the tone-mapped image is remapped to a 12-bit intensity image, for example, for feeding into a stereo vision processor (SVP), which may be implemented in the image processing and 3D ranging circuits 76 shown in Fig. 7 for the machine vision system 14.

Several different calibration/characterization algorithms to recover the CRF have been proposed in the literature, including the works of P. Debevec and J. Malik, "Recovering High Dynamic Range Radiance Maps from Photographs", SIGGRAPH 1998 and T. Mitsunaga and S. Nayar, "Radiometric Self Calibration", CVPR 1999.

For each pixel, the effective irradiance is computed as

$$\ln E(p) = \frac{[w(I_L)(g(I_L) - \ln t_L)] + [w(I_H)(g(I_H) - \ln t_H)]}{w(I_L) + w(I_H)}$$

where, $w\text{:}\ Z \to R$ is a weighting function (e.g., Gaussian, hat, etc.), $g\text{:}\ Z \to R$ is the inverse camera response function, and $I_L$, $t_L$, $I_H$, and $t_H$, are the measured 10 bit intensities and exposure times for the low and high exposure frames, respectively.

Consider the radiance map from the surface of the spherical test piece. Let $L_{max}$ and $L_{min}$ denote the radiance from the brightest and darkest parts of the sphere and the contrast in a single exposure is defined as $C = L_{max} - L_{min}$. The metric $\gamma$ captures the lighting distribution in the scene that results in this radiance map and is only a function of light distribution and test piece shape as previously described. Also, the amount of irradiance (incoming light), E, on a pixel viewing the scene element with radiance L, is proportional to L, i.e., $E = \eta L$.

Manifested contrast, $C_E$, in the captured HDR log irradiance image, lnE, is

$$C_E = \ln(\eta L_{\max}) - \ln(\eta L_{\min}) = \ln\left(\frac{L_{\max}}{L_{\min}}\right) = \ln\left(\frac{L_{\max}}{(1 - \gamma)L_{\max}}\right) = \ln\frac{1}{(1 - \gamma)}.$$

Now, assume that the scene is illuminated by a modulating light source, with a frequency of modulation, for example, 120Hz. Also, let amplitude attenuation factor, $\alpha$, define the fraction of change in light intensity at any point over a modulation cycle. In a worst case, a particular scene element may manifest radiance L and $\alpha$L in two consecutive frames with different exposures. Let the irradiance measured at low and high exposure frame corresponding to the top part of the test piece be $E_{max}$ and $\alpha E_{max}$, respectively, then after fusion the corresponding irradiance is given (in log irradiance domain) by,

$$\ln\left(\tilde{E}_{max}\right) = \frac{w_1 \ln(E_{max}) + w_2 \ln(\alpha E_{max})}{w_1 + w_2} = \ln(E_{max}) + \frac{w_2 \ln(\alpha)}{w_1 + w_2}$$

Similarly, denote irradiance measured at low and high exposure frame corresponding to the side of the test piece as $E_{min}$ and $\alpha E_{min}$, respectively. Thus after fusion the corresponding irradiance is given (in log irradiance domain) by

$$\ln(\tilde{E}_{min}) = \frac{n_1 \ln(E_{min}) + n_2 \ln(\alpha E_{min})}{n_1 + n_2} = \ln(E_{min}) + \frac{n_2 \ln(\alpha)}{n_1 + n_2}$$

The contrast in log domain can hence be written as,

$$\tilde{C} = \ln(\tilde{E}_{max}) - \ln(\tilde{E}_{max})$$

$$\tilde{C} = \ln(E_{max}) + \frac{w_2 \ln(\alpha)}{w_1 + w_2} - \ln(E_{min}) + \frac{n_2 \ln(\alpha)}{n_1 + n_2}$$

$$\tilde{C} = \ln\left(\frac{E_{max}}{E_{min}}\right) + \ln\alpha \left(\frac{w_2}{w_1 + w_2} - \frac{n_2}{n_1 + n_2}\right)$$

$$\tilde{C} = C + \ln\alpha \left(\frac{w_2}{w_1 + w_2} - \frac{n_2}{n_1 + n_2}\right)$$

Since, $\left(\frac{w_2}{w_1+w_2}\right)$ $and$ $\left(\frac{n_2}{n_1+n_2}\right) \in [0,1]$. Therefore,

$$\tilde{C} = C + \beta \ln \alpha$$

*where*

$$\beta = \left(\frac{w_2}{w_1+w_2} - \frac{n_2}{n_1+n_2}\right), -1 \leq \beta \leq 1 \qquad\qquad (4)$$

As shown by Equation 4, one can increase the effective contrast for an object by keeping $\beta \ln a > 0$. To ensure that effective contrast does not degrade, the machine vision system 14 can be configured to synchronize the exposure time of the low exposure frame to the light phase and only expose during the high period (i.e., irradiance is greater than the average irradiance of the cycle) of the modulation cycle. This technique is also effective in maintaining a minimum contrast in case there are more than one modulating light sources (with different phase). In this regard, the modulating phase and frequency of the key light 12 can be monitored as taught elsewhere herein.

Notably, modifications and other embodiments of the disclosed invention will come to mind to one skilled in the art having the benefit of the teachings presented in the foregoing descriptions and the associated drawings. Therefore, it is to be understood that the invention is not to be limited to the specific embodiments disclosed and that modifications and other embodiments are intended to be included within the scope of the claims. Although specific terms may be employed herein, they are used in a generic and descriptive sense only and not for purposes of limitation.

## Claims

1.  A method of verifying minimum object contrast within a field of view as seen by one or more imaging sensors (20) of a machine vision system (14), said method comprising:

    processing image data as acquired by the one or more imaging sensors (20) while a test object was at a minimum-contrast position within the field of view, said image data being intensity image data or 3D range data;
    calculating, based on said processing, a contrast value for the test object; and
    determining whether the contrast value meets a minimum contrast requirement, as represented by a predefined threshold, **characterized in that** the test object is a textureless sphere and **in that** Gamma represents the contrast created on the surface of the test object as a function of scene lighting and is defined as,

$$\gamma \equiv \frac{I_{\max} - I_{\min}}{I_{\max}} \, ,$$

and where $I_{\max}$ and $I_{\min}$ are the maximum and minimum intensity values on the test object image calculating the contrast value comprises calculating Gamma for the test object and further wherein determining whether the minimum contrast requirement is met comprises comparing Gamma to the predefined threshold.

2. An apparatus (50) configured to verify minimum object contrast within a field of view as seen by one or more imaging sensors (20) of a machine vision system (14), said apparatus (50) comprising one or more processing circuits (52) configured to:

process image data corresponding to imaging of the field of view by the one or more imaging sensors (20) while a test object was at a minimum-contrast position within the field of view, said image data being intensity image data or 3D range data;
calculate, based on said processing, a contrast value for the test object; and
determine whether the contrast value meets a minimum contrast requirement, as represented by a predefined threshold, see claim 1 Gamma represents the contrast created on the surface of the test object as a function of scene lighting and is defined as,

$$\gamma \equiv \frac{I_{\max} - I_{\min}}{I_{\max}} \, ,$$

and see claim 1 the one or more processing circuits (52) are configured to calculate the contrast value comprises calculating Gamma for the test object and further wherein determining whether the minimum contrast requirement is met comprises comparing Gamma to the predefined threshold.

3. The apparatus (50) of claim 2, further comprising one or more interface circuits configured to receive the image data. 3

4. The apparatus (50) of claims 3, wherein the one or more interface circuits are further configured to record or otherwise output one or more signals indicating whether the minimum contrast requirement is met.

5. The apparatus (50) of claim 2, wherein the apparatus (50) comprises one or more functional processing circuits (52) integrated into the machine vision system (14), which comprises the one or more image sensors (20) and an associated control and processing unit.

**Patentansprüche**

1. Verfahren zum Verifizieren eines minimalen Objektkontrastes innerhalb eines Sichtfeldes eines oder mehrerer Sensoren (20) eines Systems (14) zum maschinellen Sehen, wobei das Verfahren Folgendes aufweist:

Verarbeiten von Bilddaten wie sie von dem einem oder den mehreren Bildsensoren (20) erfasst wurden, während ein Testobjekt an einer Position minimalen Kontrasts innerhalb des Sichtfeldes angeordnet war, wobei die Bilddaten Intensitäts-Bilddaten oder 3D-Bereichs-Daten sind;
Berechnen, auf Basis der Verarbeitung, eines Kontrastwerts für das Testobjekt; und
Bestimmen, ob der Kontrastwert eine Voraussetzung für minimalen Kontrast erfüllt, wie sie von einem vorbestimmten Schwellwert dargestellt wird,

**dadurch gekennzeichnet, dass**
das Testobjekt eine texturlose Kugel ist, und dass Gamma einen auf der Oberfläche des Testobjekts erzeugten Kontrast als Funktion der Szenenbeleuchtung darstellt und definiert ist als

$$\gamma \equiv \frac{I_{\max} - I_{\min}}{I_{\max}},$$

wobei $I_{\max}$ und $I_{\min}$ die maximalen bzw. minimalen Intensitätswerte auf dem Testobjektbild sind, und das Berechnen des Kontrastwertes Berechnen von Gamma für das Testobjekt umfasst, und wobei das Bestimmen, ob die Voraussetzung für den minimalen Kontrastwert erfüllt ist, einen Vergleich von Gamma mit dem vorbestimmten Schwellwert umfasst.

2. Vorrichtung (50) zum Verifizieren eines minimalen Objektkontrastes innerhalb eines Sichtfeldes eines oder mehrerer Sensoren (20) eines Systems (14) zum maschinellen Sehen, wobei die Vorrichtung (50) einen oder mehrere Verarbeitungsschaltkreise (52) aufweist, die eingereichtet sind zum:

Verarbeiten von Bilddaten wie sie von dem einem oder den mehreren Bildsensoren (20) erfasst wurden, während ein Testobjekt an einer Position minimalen Kontrasts innerhalb des Sichtfeldes angeordnet war, wobei die Bilddaten Intensitäts-Bilddaten oder 3D-Bereichs-Daten sind;
Berechnen, auf Basis der Verarbeitung, eines Kontrastwerts für das Testobjekt; und
Bestimmen, ob der Kontrastwert eine Voraussetzung für minimalen Kontrast erfüllt, wie sie von einem vorbestimmten Schwellwert dargestellt wird,

**dadurch gekennzeichnet, dass**
das Testobjekt eine texturlose Kugel ist, und dass Gamma einen auf der Oberfläche des Testobjekts erzeugten Kontrast als Funktion der Szenenbeleuchtung darstellt und definiert ist als

$$\gamma \equiv \frac{I_{\max} - I_{\min}}{I_{\max}},$$

wobei $I_{\max}$ und $I_{\min}$ die maximalen bzw. minimalen Intensitätswerte auf dem Testobjektbild sind, und der eine bzw. die mehreren Verarbeitungsschaltkreise (52) eingerichtet sind zum Berechnen des Kontrastwertes durch das Berechnen von Gamma für das Testobjekt, und wobei das Bestimmen, ob die Voraussetzung für den minimalen Kontrastwert erfüllt ist, einen Vergleich von Gamma mit dem vorbestimmten Schwellwert umfasst.

3. Vorrichtung (50) gemäß Anspruch 2, ferner aufweisend einen oder mehrere Schnittstellenschaltkreise, die eingerichtet sind, Bilddaten zu Empfangen.

4. Vorrichtung (50) gemäß Anspruch 3, wobei der eine bzw. die mehreren Schnittstellenschaltkreise eingerichtet sind, ein oder mehrere Signale aufzuzeichnen oder auszugeben, die anzeigen, ob die Voraussetzung für den minimalen Kontrastwert erfüllt ist.

5. Vorrichtung (50) gemäß Anspruch 2, wobei die Vorrichtung (50) eine oder mehrere Verarbeitungsschaltkreise (52) aufweist, die in das System (14) zum maschinellen Sehen integriert sind, welches den einen bzw. die mehreren Bildsensoren (20) sowie eine zugeordnete Steuer- und Verarbeitungseinheit aufweist.

**Revendications**

1. Procédé de vérification d'un contraste d'objet minimum dans un champ de vision tel que vu par un ou plusieurs capteurs d'imagerie (20) d'un système de vision artificielle (14), ledit procédé comprenant de :

traiter des données d'image acquises par un ou plusieurs capteurs d'imagerie (20) tandis qu'un objet de test est dans une position de contraste minimum dans le champ de vision, lesdites données d'image étant des données d'image d'intensité ou de données de plage 3D ;
calculer, sur la base dudit traitement, une valeur de contraste pour l'objet de test ; et
déterminer si la valeur de contraste répond à une exigence de contraste minimum,

telle que représentée par un seuil prédéfini,
**caractérisé en ce que** l'objet de test est une sphère sans texture, et **en ce que** Gamma représente le contraste créé sur la surface de l'objet de test en fonction de l'éclairage de la scène et est défini sous la forme,

$$\gamma \equiv \frac{I_{max} - I_{min}}{I_{max}}$$

où $i_{max}$ et $i_{min}$ sont les valeurs d'intensité maximale et minimale sur l'image de l'objet de test,
et calculer la valeur de contraste comprend de calculer Gamma pour l'objet de test et
dans lequel, en outre, déterminer si l'exigence de contraste minimum est remplie comprend de comparer Gamma au seuil prédéfini.

2. Appareil (50) configuré pour vérifier le contraste d'objet minimum dans un champ de vision tel que vu par un ou plusieurs capteurs d'imagerie (20) d'un système de vision artificielle (14), ledit appareil (50) comprenant un ou plusieurs circuits de traitement (52) configurés pour :

traiter des données d'image correspondant à une imagerie du champ de vision par lesdits un ou plusieurs capteurs d'imagerie (20) tandis qu'un objet de test est dans une position de contraste minimum dans le champ de vision, lesdites données d'image étant des données d'image d'intensité ou des données de plage 3D ;
calculer, sur la base dudit traitement, une valeur de contraste pour l'objet de test ; et
déterminer si la valeur de contraste répond à une exigence de contraste minimum,

telle que représentée par un seuil prédéfini,
**caractérisé en ce que** l'objet de test est une sphère sans texture, et **en ce que** Gamma représente le contraste créé sur la surface de l'objet de test en fonction de l'éclairage de la scène et est défini sous la forme,

$$\gamma \equiv \frac{I_{max} - I_{min}}{I_{max}}$$

où $i_{max}$ et $i_{man}$ sont les valeurs d'intensité minimale et maximale sur l'image d'objet de test et un ou plusieurs circuits de traitement (52) sont configurés pour calculer la valeur de contraste par calculer Gamma pour l'objet de test et dans lequel, en outre, déterminer si l'exigence de contraste minimum est satisfaite comprend de comparer Gamma au seuil prédéfini.

3. Appareil (50) selon la revendication 2, comprenant en outre une ou plusieurs interfaces configurées pour recevoir les données d'image.

4. Appareil (50) selon la revendication 3, dans lequel lesdits un ou plusieurs circuits d'interface sont en outre configurés pour enregistrer ou autrement délivrer un ou plusieurs signaux indiquant que l'exigence de contraste minimum est satisfaite.

5. Appareil (60) selon la revendication 2, dans lequel l'appareil (50) comprend un ou plusieurs circuits de traitement fonctionnels (52) intégrés dans le système de vision artificielle (14), qui comprend un ou plusieurs capteurs d'imagerie (20) et une unité de commande et de traitement associée.

KEY
LIGHT
12

ILLUMINATION
MONITORING
APPARATUS 10

SENSOR
UNIT(S) 22

MACHINE/
AREA 18

MACHINE VISION
SYSTEM 14

IMAGE
SENSOR(S)
20

MONITORED
VOLUME
16

**FIG. 1**

400

MONITOR ONE OR MORE OPERATING
PARAMETERS OF A KEY LIGHT DURING
OPERATION OF A MACHINE VISION
SYSTEM
402

DETERMINE WHETHER THE ONE OR
MORE MONITORED PARAMETERS MEET
PREDEFINED OPERATING REQUIREMENTS
404

GENERATE ONE OR MORE INFORMATION
OR CONTROL SIGNALS RESPONSIVE TO
AT LEAST ONE OF: DETECTING A LOSS OF
ILLUMINATION FROM THE KEY LIGHT; AND
DETERMINING THAT ONE OR MORE OF
THE MONITORED PARAMETERS DO NOT
MEET THE PREDEFINED OPERATING
REQUIREMENTS
406

**FIG. 4**

EP 2 842 104 B1

SIGNAL(S)
FOR SENSED
ILLUMINATION
PARAMETER(S)

EVALUATION
SIGNAL(S)
e.g., INDICATING
WHETHER KEY LIGHT IS
OUT OF SPEC

10

KEY
LIGHT
12

SENSOR
UNIT(S) 22

EVALUATION
UNIT 30

CONTROL
UNIT 32

CONTROL AND/OR COMM.
SIGNALS, e.g., MACHINE-
STOP SIGNALS,
MAINTENANCE
ALARMS, STATUS
INDICATORS, etc.

TESTING/VERIFICATION

NETWORK
COMM.

OPTIONAL
TEST &
COMM.
CIRCUITRY
34

MACHINE

*FIG. 2*

**FIG. 3**

EP 2 842 104 B1

**FIG. 5**

EP 2 842 104 B1

FIG. 6

EP 2 842 104 B1

MACHINE VISION SYSTEM <u>14</u>

| KEY LIGHT <u>12</u> |

MACHINE VISION CONTROL/PROC. UNIT 72

| MACHINE CONTROL AND COMM. <u>78</u> | IMA <u>10</u> / CVA <u>50</u> |

| SENSOR UNIT <u>22</u> |

| IMAGE PROCESSING AND 3D RANGING 7<u>6</u> | IMAGE ACQUISITION CIRCUITS <u>74</u> |

| CAMERA 1 <u>70-1</u> |

| CAMERA 2 <u>70-2</u> |

MONITORED VOLUME <u>16</u>

**FIG. 7**

*FIG. 8*

*FIG. 9*

**FIG. 10**

*FIG. 11*

2 m.

92-1　　　70　　　92-3　　　92-2

z

16

90

FLOOR

**FIG. 12**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 61646491 B

### Non-patent literature cited in the description

- **YI S. et al.** Automatic sensor and light source positioning for machine vision. *Proceedings of the international conference on pattern recognition, Atlantic City,* 16 June 1990

- **P. DEBEVEC ; J. MALIK.** Recovering High Dynamic Range Radiance Maps from Photographs. *SIGGRAPH,* 1998
- **T. MITSUNAGA ; S. NAYAR.** Radiometric Self Calibration. *CVPR,* 1999